# FASCICULE DE BREVET EUROPEEN

(11) **EP 0 443 403 B1**
(45) Date de publication et mention de la délivrance du brevet: **07.12.1994**
(21) Numéro de dépôt: 91101899.2
(22) Date de dépôt: 11.02.1991
(51) Int. Cl.: H02K 7/08, H02K 1/27, H02K 21/18

(54) **Micromoteur électromagnétique destiné à équiper un mouvement de montre de petite dimension**
Elektromagnetischer Mikromotor zur Ausrüstung eines kleinen Uhrwerkes
Electromagnetic micro-motor for equipping a small clockwork-movement

(30) Priorité: 19.02.1990 CH 527/90
(43) Date de publication de la demande: 28.08.1991
(73) Titulaire: Eta SA Fabriques d'Ebauches, 2540 Granges (CH)
(72) Inventeur: Friedrich, Perrot, CH-2543 Lengnau (CH)
(74) Mandataire: de Raemy, Jacques

(56) Documents cités:
- FR-E- 74 145
- PATENT ABSTRACTS OF JAPAN vol. 4, no. 4 (E-164), 12 janvier 1980 ; & JP-A-54 143 807
- PATENT ABSTRACTS OF JAPAN vol. 4, no. 75 (E-13)(557) 31 mai 1980 ; & JP-A-55 43 926
- PATENT ABSTRACTS OF JAPAN vol. 3, no. 156 (E-161), 21 décembre 1979 ; & JP-A-54 136 610

## Description

L'invention concerne un micromoteur du type électromagnétique.

Plus particulièrement, elle concerne un micromoteur électromagnétique destiné à équiper un mouvement de montre de petite dimension, tel que ceux utilisés dans les montres pour dames.

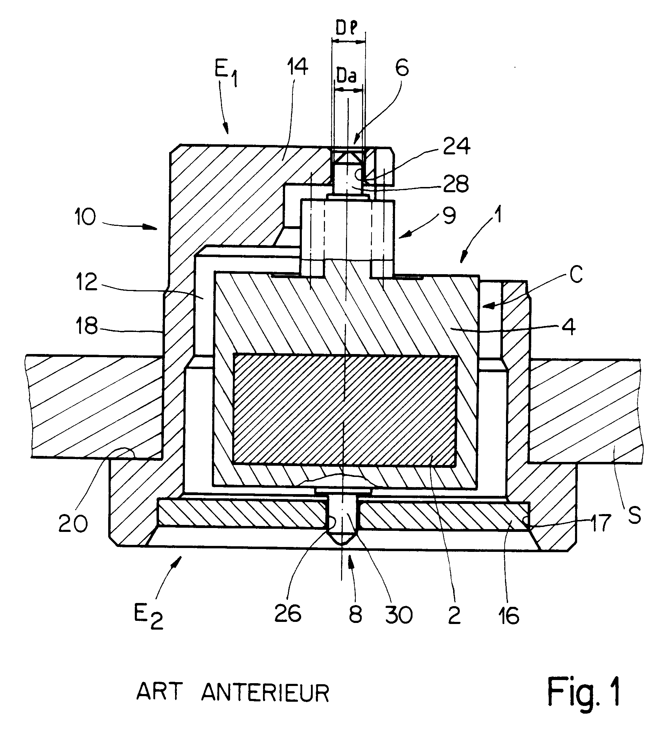

Les micromoteurs électromagnétiques classiques, tels que celui représenté à la figure 1, qui équipent la plupart des mouvements de montre électronique-mécanique du type analogique ou numérique comportent un rotor constitué d'un aimant permanent qui est partiellement, voire totalement noyé à l'intérieur d'un surmoulage réalisé en un matériau plastique injecté.

Ce rotor est monté libre en rotation à l'intérieur d'une cage généralement cylindrique dont le pourtour extérieur est engagé avec précision dans un stator.

Ainsi, pour le montage mobile du rotor, le surmoulage comporte à ses deux extrémités longitudinales des axes ou pivots coaxiaux à l'axe géométrique du rotor et venant de matière avec le corps du surmoulage.

Ces axes, qui sont donc aussi réalisés en plastique injecté, viennent se loger dans des logements correspondants ménagés respectivement dans le fond de la cage et dans son couvercle.

Ce type de moteur a jusqu'ici donné entière satisfaction, notamment, d'une part, grâce à la précision du positionnement du rotor par rapport au stator, et d'autre part, grâce à sa conception très compacte.

Toutefois, sa construction s'avère inadaptée et limitée lorsqu'il s'agit de l'implanter dans des mouvements de petite dimension, tels que ceux des montres pour dames.

En effet, lorsqu'on cherche à miniaturiser davantage un mouvement de montre, on est obligé de miniaturiser la pile qui l'équipe.

La diminution du volume de pile entraîne une diminution importante de l'énergie disponible.

Ainsi pour pouvoir offrir à l'utilisateur une autonomie de marche suffisante il faut restreindre la consommation du mouvement.

L'une des voies permettant de répondre à cet impératif est d'augmenter le rendement du moteur, et ce par diminution des pertes dues aux frottements.

Ce premier problème étant posé, on a pensé qu'une solution mécanique possible était la diminution du diamètre des axes du rotor afin d'obtenir une diminution du couple de frottement.

Malheureusement, après de nombreux essais, l'injection de ces axes s'est avérée quasi impossible au-dessous d'un certain diamètre.

En effet, dans la plupart des cas, les axes ont présentés des défauts de structure et d'alignement qui ont rendu impossible leur fonction comme éléments de guidage en rotation.

De plus, on a pu constater qu'au dessous d'une certaine valeur seuil, il était difficile et donc coûteux de réaliser par perçage ou par étampage les logements respectivement du fond et du couvercle de la cage dans lesquels viennent s'engager les axes ou pivots du rotor, à cause des ruptures et endommagements très fréquents des forets et des poinçons. Au vu de ces constatations, on a supposé logiquement que le micromoteur classique ci-dessus décrit ne pourrait équiper un mouvement de montre davantage miniaturisé, ses limites de rendement et de dimensionnement étant atteintes.

Un autre micromoteur selon l'art antérieur et dans lequel les pivots sont solidaires du stator est décrit dans le document JP-A-54 14 38 07

Ainsi, l'invention a-t-elle pour but de lever cet obstacle en proposant un micromoteur électromagnétique d'une conception proche de celle du micromoteur classique, c'est-à-dire constitué d'un rotor surmoulé monté pivotant dans une cage, mais offrant un rendement plus élevé pour pouvoir être alimenté, avec une autonomie de marche suffisante, par une pile de moindre capacité.

A cet effet, l'invention a pour objet un micromoteur électromagnétique du type comprenant :
- un rotor constitué d'un aimant permanent au moins partiellement noyé dans un surmoulage réalisé en un matériau plastique, ce surmoulage comportant un moyen d'accouplement mécanique à un mécanisme à entraîner,
- une cage à l'intérieur de laquelle est monté libre en rotation ledit rotor, cette cage qui est délimitée à une première extrémité par un fond et à une deuxième extrémité par un couvercle étant destinée à être engagée à l'intérieur d'un stator, et
- des premier et second moyens de guidage en rotation du rotor dans la cage, lesdits premier et second moyens de guidage étant prévus sur le surmoulage ainsi que respectivement sur le fond et sur le couvercle de ladite cage, caractérisé en ce que les premier et second moyens de guidage en rotation précités sont constitués, d'une part, par deux logements ménagés de façon coaxiale dans ledit surmoulage en matière plastique, et d'autre part, par deux axes ou pivots qui sont respectivement solidaires du fond et du couvercle de la cage et qui sont destinés à venir se loger dans un desdits logements, le pivot solidaire du fond de la cage venant de matière avec la fond.

On comprend donc qu'avec un tel agencement on peut diminuer de façon significative les diamètres respectifs des axes du fond de la cage et de son couvercle qui ne sont donc plus réalisés en un matériau plastique injecté mais désormais en un matériau métallique, par exemple, usinable par décolletage. De plus, on a pu concilier les impératifs de miniaturisation et les avantages inhérents à la structure du micromoteur classique (précision, compacité) en conservant la conception du rotor surmoulé pivotant librement à l'intérieur d'une cage intermédiaire rapportable.

Mais d'autres avantages de l'invention apparaîtront mieux à la lecture de la description détaillée qui suit, prise en référence aux dessins annexés qui sont donnés à titre d'exemple, et dans lesquels :
- la figure 1 est une vue en coupe longitudinale d'un micromoteur électromagnétique d'un type classique;
- la figure 2 est une vue en coupe longitudinale d'un premier mode de réalisation d'un micromoteur électromagnétique selon l'invention, faite selon la ligne II-II de la figure 3;
- la figure 3 est une vue de dessus du micromoteur de la figure 2.
- la figure 4 est une vue similaire à la figure 2 mais représentant un deuxième mode de réalisation d'un micromoteur selon l'invention; et
- la figure 5 est une vue agrandie d'une zone usinée du fond de la cage qui équipe un micromoteur selon un troisième mode de réalisation.

En se rapportant tout d'abord à la figure 1, on décrira un moteur électromagnétique classique, jusqu'ici utilisé dans de nombreux mouvements de montre.

Ce moteur comporte un rotor 1 constitué d'un aimant permanent 2 qui est, dans cet exemple, partiellement noyé à l'intérieur d'un surmoulage en matériau plastique 4. Ce surmoulage en matériau plastique 4, qui a une forme sensiblement cylindrique, comporte à ses deux extrémités longitudinales opposées des premier et second moyens de guidage en rotation, respectivement 6 et 8.

Entre le premier moyen de guidage en rotation 6 et le corps C du surmoulage 4 est ménagé un pignon 9 dont le nombre de dents est généralement choisi entre 6 et 10.

Le rotor 1 est monté mobile en rotation à l'intérieur d'une cage 10 qui a une forme sensiblement cylindrique. Cette cage 10 présente un évidement intérieur 12 dans lequel vient se loger le rotor 1 et qui est partiellement fermé à sa première extrémité E1 par un fond 14 venant de matière avec la cage 10 et à sa deuxième extrémité E2 par un couvercle rapporté 16.

Le couvercle 16 est chassé dans une noyure 17 ménagée dans la cage 10, au proche de son extrémité E2.

Par ailleurs, la cage 10 présente un pourtour extérieur 18 rectifié avec précision et limité au proche de la deuxième extrémité E2 par un épaulement 20.

Ainsi, la cage est particulièrement conformée pour venir s'engager et se positionner avec précision à l'intérieur d'un stator S, ce qui permet un ajustement très précis, rapide et reproductible du rotor 1 par rapport au stator S.

Par ailleurs, le fond 14 et le couvercle 16 comportent respectivement un orifice alésé ou logement 24, 26. Dans les deux orifices alésés ou logements 24 et 26 viennent respectivement s'engager des axes ou pivots 28 et 30 venant de matière avec le surmoulage 4. Ainsi, les orifices 24 et 26 et les axes 28 et 30 forment deux à deux respectivement le premier et le second moyens de guidage en rotation 6 et 8 du rotor 1 à l'intérieur de la cage 10.

On comprend donc que les axes 28 et 30, le pignon 9 et le corps C du surmoulage ne forment qu'une pièce en venant tous ensemble de matière, cette pièce monolithique étant réalisée par une technique d'injection classique.

Comme on l'a expliqué ci-avant, la miniaturisation de ce type de moteur s'est heurtée aux limites d'injection des axes 28 et 30 qui, dans la plupart des cas, ne peuvent au-dessous d'un certain seuil remplir leur fonction de guidage du rotor 1 en rotation. On précisera que le diamètre minimum Da des axes ou pivots 28 et 30 qui a pu être atteint est de 0,16.10⁻³ mètre (0,16 mm). On s'est aussi heurté aux limites de réalisation des orifices ou logements 24 et 26, à cause de la résistance insuffisante des outils, tels que les forets ou poinçons. Le diamètre minimum Dl de ces logements 24, 26 qui a pu être atteint est de 0,14.10⁻³ mètre (0,14 mm).

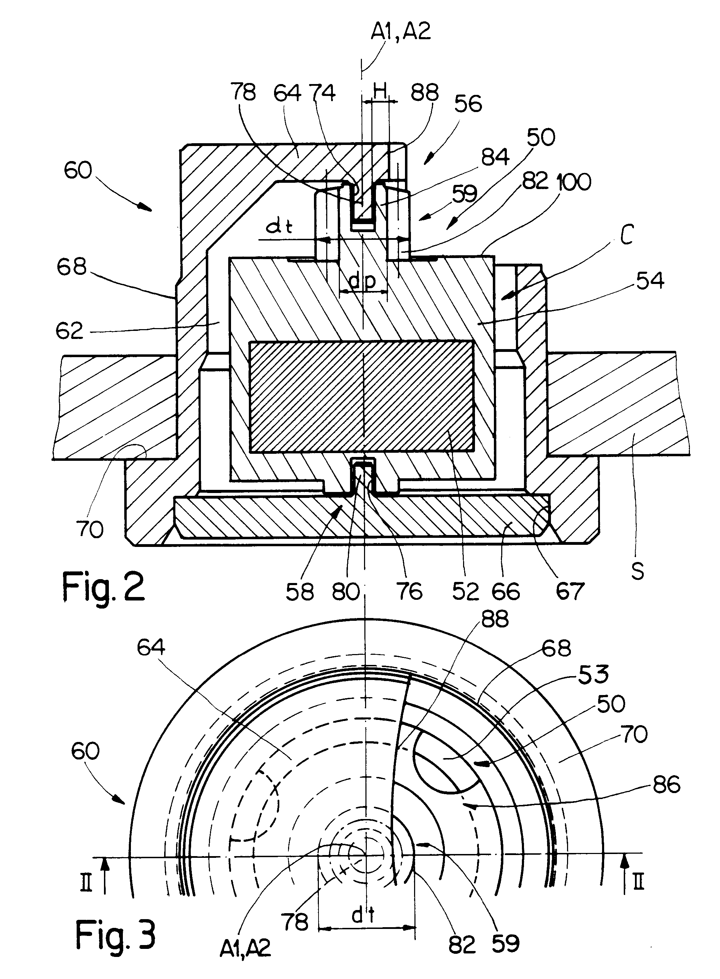

En se référant désormais aux figures 2 et 3, il est représenté un micromoteur électromagnétique selon l'invention. On remarquera que ce micromoteur est de conception très proche de celle du micromoteur de la figure 1 et qu'il conserve toutes les caractéristiques qui font son intérêt tant technique que commercial.

En effet, le micromoteur de la figure 2 comporte un rotor 50 pourvu d'un aimant permanent cylindrique 52 qui est, dans cet exemple, partiellement noyé à l'intérieur d'un surmoulage en matériau plastique 54. Le surmoulage 54 est constitué d'un corps C dont une extrémité se prolonge par un pignon 59.

Le corps C du surmoulage 54 comporte plusieurs échancrures 53 (figure 3) dégageant partiellement l'aimant permanent 52. Ces échancrures 53 représentent "l'empreinte" d'éléments de maintien qui lors de l'injection du surmoulage 54 permettent de soutenir l'aimant permanent 52.

Le pignon 59 est pourvu de dents 82 (généralement 6 à 10) qui s'étendent jusqu'au flanc latéral correspondant 100 du corps C du surmoulage 54. Ces dents 82 forment un prolongement du flanc latéral 100 en venant de matière avec le corps C. Le rotor ayant une forme sensiblement cylindrique, il présente un axe géométrique longitudinal A1 tandis que le flanc 100 forme l'une des bases du corps C.

De même, le rotor 50 est monté libre en rotation à l'intérieur d'une cage 60 qui comporte un évidement intérieur 62 délimité, d'une part, par un fond 64 venant de matière, et d'autre part, par un couvercle 66 rapporté et chassé dans une noyure 67 de la cage 60.

La cage 60 comporte de même un pourtour extérieur 68 conformé pour venir s'engager dans le stator S. Ce pourtour extérieur 68 est délimité du côté de la noyure 67 par un épaulement 70 qui vient en appui sur le stator S. On remarquera par ailleurs que le fond 64 ne ferme pas complètement l'évidement 62 pour permettre l'accès au pignon 59 et son engrènement avec un mécanisme à entraîner, non représenté.

Ce micromoteur comporte des premier et second moyens de guidage en rotation 56 et 58 du rotor 50 à l'intérieur de la cage 60, dont la conception a permis avec succès d'aller encore plus loin dans sa miniaturisation et dans celle du mouvement qu'il équipe. Ces moyens de guidage permettent la rotation du rotor 50 autour d'un axe géométrique A2 qui est disposé longitudinalement à la cage 60 et qui est confondu avec l'axe A1 du rotor 50.

On remarquera que ces moyens de guidage en rotation sont constitués, d'une part, par deux logements cylindriques borgnes, respectivement 74 et 76 ménagés de façon coaxiale dans le surmoulage 54, et d'autre part, par deux axes ou pivots 78 et 80, respectivement solidaires du fond 64 et du couvercle 66 de la cage 60.

L'axe 78, qui fait saillie du fond 64 de la cage en direction de son évidement 62, vient se loger dans le logement 74 du surmoulage 54 et constitue avec ce logement 74 le premier moyen de guidage en rotation du rotor 50, tandis ce que l'axe 80, qui fait saillie du couvercle 66 en direction de l'évidement 62 vient s'engager dans le logement 76 du surmoulage 54 et constitue avec celui-ci le deuxième moyen de guidage en rotation du rotor.

Le logement 74 est constitué par un orifice cylindrique ménagé dans le corps du pignon 59, au centre de celui-ci. En d'autres termes, le logement 74 est ménagé à la hauteur des dents 59, au même niveau que celles-ci. Ainsi, les dents 82 de ce pignon 59 constituent des raidisseurs qui viennent renforçer la rigidité de la paroi 84 qui délimite le logement 74. On peut donc constater que de façon très avantageuse la structure du pignon 59 vient coopérer mécaniquement avec la paroi 84 du logement 74 et offre dans cette conception une fonction supplémentaire par rapport à celle de l'engrènement classique avec une roue d'un mécanisme. Ainsi, puisqu'on peut prévoir une paroi 84 d'une faible épaisseur, il n'est pas nécessaire d'augmenter le diamètre dp qui est le diamètre de pied du pignon 59, et on peut donc conserver un nombre minimum de dents sur ce pignon 59.

D'autre part, on précisera que dans un mode de réalisation préféré l'axe 78 vient de matière avec le fond 64 de la cage 60, cet axe 78 étant réalisé par tournage - décolletage depuis l'évidement 62. Ce mode de réalisation est très économique puisqu'il évite la mise en place d'un axe rapporté, ce qui est une solution généralement sensiblement plus coûteuse à cause des problèmes de transport et de mise en place.

De plus, à cet endroit précis, c'est-à-dire sur le fond 64, cette disposition offre d'autres avantages.

Comme on le remarquera sur la figure 3, le fond 64 de la cage 60 est échancré, comme l'indique la flèche 86, afin d'engager par translation axiale de la cage 60 dans le stator S, les dents 82 du pignon 59 dans une roue correspondante. Le pignon 59 ayant des très faibles diamètres de pied dp et de tête dt, à cause de son nombre limité de dents et du module de ses dents qui doit être suffisant pour assurer une résistance au cisaillement acceptable, il est nécessaire de ménager une échancrure relativement grande et d'éliminer, sur le fond 64, de la matière presque jusqu'à l'axe de rotation A2 du rotor 50.

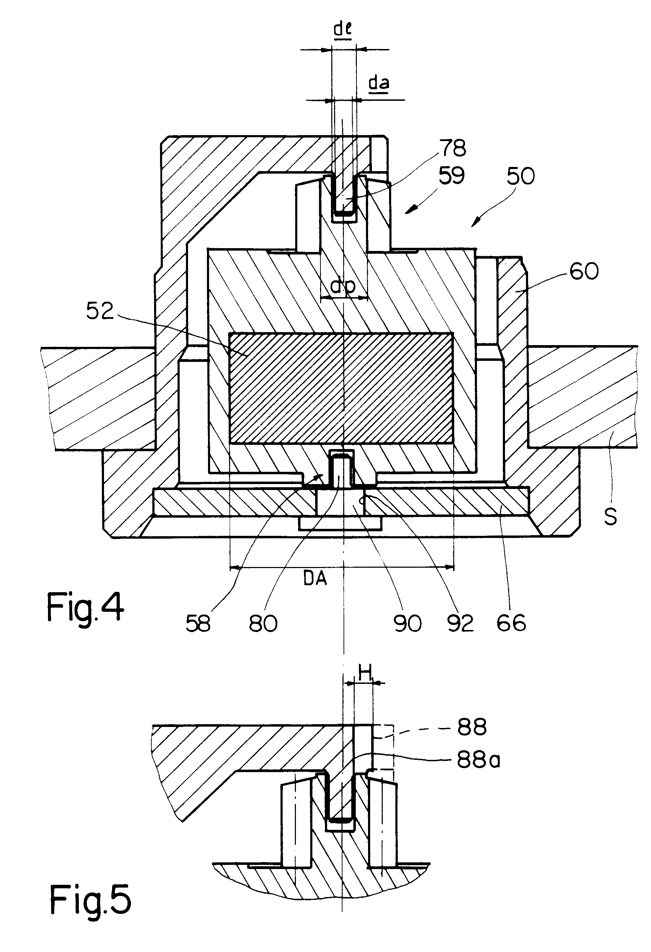

Comme on peut l'observer sur les figures 2 et 3, il ne reste qu'une très faible épaisseur de matière entre le pourtour extérieur de l'axe 78 et le flanc usiné 88 du fond 64. Cette zone de matière qui est référencée en H sur la figure 2 présente une épaisseur extrêmement faible. Lors d'essais qui ont été effectués avec un axe étagé rapporté dans le fond 64 on a pu observer que la zone de matière H, qui a une tenue mécanique très faible, se fissurait lors des efforts de chassage de l'axe dans le fond 64. C'est la raison pour laquelle la conception de l'axe 78 venant de matière avec le fond 64 s'avère extrêmement avantageuse. De plus, dans ce cas comme dans celui du moteur classique de la figure 1, cette zone de matière qui est indispensable doit présenter au niveau de l'axe (rapporté et chassé, ou engagé et pivotant) une épaisseur telle que la distance entre le flanc 88 et l'axe de rotation A soit au moins égale à la moitié du diamètre de pied dp, pour permettre l'engagement avec une roue correspondante et l'engrènement correct avec celle-ci. On précisera aussi que grâce à cette solution la zone de matière H peut être partiellement, voire totalement éliminée, comme cela est représenté à la figure 5, ce qui permet de reculer la position du flanc usiné 88 et de prévoir un nouveau flanc 88a réalisé dans des tolérances de fabrication plus grandes. On précisera aussi que grâce à cette disposition, on a pu diminuer par rapport au micromoteur classique de la figure 1 les diamètres de pied dp et de tête dt du pignon 59 ce qui permet, pour un même module de denture, de diminuer le nombre des dents 82.

A titre d'exemple, on précisera que le diamètre da (figure 4) des axes 78 et 80 qui ont pu être réalisés grâce à cette disposition a une valeur de 0,11.10⁻³ mètre (0,11 mm). Le diamètre dl des logements 74 et 76 qui ont été réalisés est de 0,13.10⁻³ mètre (0,13 mm).

Pour mieux situer les dimensions du micromoteur selon l'invention, on indiquera par ailleurs que les diamètres de pied dp et de tête dt du pignon 59 sont respectivement d'environ 0,24.10⁻³ mètre (0,24 mm) et d'environ 0,5.10⁻³ mètre (0,5 mm). Le diamètre DA de l'aimant permanent est d'environ 1,2.10⁻³ mètres (1,2 mm).

Toujours selon ce premier mode de réalisation, on remarquera que l'axe 80 du deuxième moyen de guidage en rotation 58 vient de matière avec le couvercle 66 de la cage 60. Toutefois, et comme cela est représenté à la figure 4, dans un deuxième mode de réalisation, l'axe 80 est ménagé sur un tenon 90 qui est rapporté et monté à force (chassé) dans un logement alésé correspondant 92 ménagé dans le couvercle 66. Cette disposition est extrêmement avantageuse puisqu'elle permet de réaliser l'axe 80 en un matériau différent de celui de la cage 60, voire de celui du couvercle 66. En effet, la cage et éventuellement le couvercle 66 sont réalisés en laiton pour des raisons de perméabilité magnétique, tandis ce que l'axe 80 et le tenon 90 dont il est solidaire peuvent être réalisés en acier.

De ce fait, l'axe 80 présente une résistance au cisaillement qui lui permet pour un même diamètre que l'axe 78 de supporter des chocs latéraux plus importants que l'axe 78. On remarquera en effet que l'aimant permanent 52 est fortement déporté vers le couvercle 66, et donc vers l'axe 80 qui subit des charges beaucoup plus importantes que l'axe 78 lors de ces chocs latéraux.

On précisera aussi que grâce à cette différence de matière les deux axes 78 et 80 peuvent présenter des diamètres différents.

On comprend donc que cette conception, dans laquelle les axes sont solidaires respectivement de la cage et du fond, et dans laquelle les logements sont réalisés dans le surmoulage lors de son injection sur l'aimant permanent, répond parfaitement aux problèmes de miniaturisation d'un mouvement de montre, grâce à l'augmentation possible du rendement du moteur. Cette conception permet aussi la miniaturisation du micromoteur lui-même qui compenserait sa perte de puissance (diminution du volume de l'aimant) par cette augmentation de rendement. De plus, on observe que la structure du pignon, tel qu'il est ménagé dans le surmoulage, vient concourir à la résistance mécanique d'un des logements réalisés dans ce surmoulage. De plus, les axes peuvent être réalisés en des matériaux différents si bien que l'un, le plus sollicité, peut présenter des caractéristiques mécaniques d'un ordre supérieur pour un même diamètre.

Par ailleurs, les axes 78 et 80 en étant désormais réalisés en un matériau métallique offrent une résistance au cisaillement supérieure à celle des axes 28 et 30 du micromoteur classique de la figure 1 qui sont en un matériau plastique, et ce même avec une diminution sensible du diamètre de ces axes 78 et 80.

## Revendications

1. Micromoteur électromagnétique du type comprenant :
- un rotor (50) constitué d'un aimant permanent (52) au moins partiellement noyé dans un surmoulage (54) réalisé en un matériau plastique, ce surmoulage (54) comportant un moyen d'accouplement mécanique (59) à un mécanisme à entraîner,
- une cage (60) à l'intérieur de laquelle est monté libre en rotation ledit rotor (50), ladite cage étant délimitée à une première extrémité par un fond (64) et à une seconde extrémité par un couvercle (66) et étant destinée à être engagée à l'intérieur d'un stator, et
- des premier et second moyens de guidage en rotation (56, 58) du rotor dans la cage, ces moyens étant ménagés sur le surmoulage dudit rotor ainsi que respectivement sur le fond (64) et sur le couvercle (66) de ladite cage (50), caractérisé en ce que les premier et second moyens de guidage en rotation (56, 58) sont constitués, d'une part, par deux logements (74, 76) ménagés de façon coaxiale dans ledit surmoulage en matériau plastique (54), et d'autre part, par deux pivots (78, 80) qui sont respectivement solidaires du fond (64) et du couvercle (66) de la cage et qui sont destinés à venir se loger dans un des logements précités (74, 76), le pivot (78) solidaire du fond de la cage venant de matière avec le fond (64).

2. Micromoteur selon la revendication 1, dans lequel le fond (64) de ladite cage (60) présente une échancrure (86) permettant l'engrènement du moyen d'accouplement (59) du rotor (50) avec ledit mécanisme à entraîner, l'échancrure (86) étant délimitée dans le fond (64) par un flanc, caractérisé en ce que que cette échancrure présente un flanc (88a) ménagé dans ledit fond (64) en une position dite reculée, telle qu'une zone de matière (H) entre le pourtour extérieur du pivot (78) et ledit flanc (88a) soit éliminée.

3. Micromoteur selon la revendication 1 ou 2, caractérisé en ce que le pivot (80) solidaire du couvercle vient de matière avec le couvercle (66) de la cage (60).

4. Micromoteur selon la revendication 1 ou 2, caractérisé en ce que le pivot (80) du couvercle est rapporté dans ledit couvercle (66).

5. Micromoteur selon la revendication 4, caractérisé en ce que le pivot (80) rapporté est monté à force dans ledit couvercle (66).

6. Micromoteur selon l'une quelconque des revendications précédentes, caractérisé en ce que les deux pivots (70, 80) des deux moyens de guidage ont des diamètres différents.

7. Micromoteur selon l'une quelconque des revendications précédentes, caractérisé en ce que les deux pivots (70, 80) sont réalisés en des matériaux différents.

8. Micromoteur selon l'une quelconque des revendications précédentes dans lequel le moyen d'accouplement (59) est constitué par un pignon venant de matière avec le corps (P) du surmoulage (54), caractérisé en ce que le logement (74) du premier moyen de guidage en rotation (56) est ménagé dans le corps du pignon (59), à la hauteur des dents (82) de ce pignon (59) qui forment raidisseur et rigidifient la paroi (84) définissant ledit logement (74).

9. Micromoteur selon l'une quelconque des revendications précédentes, caractérisé en ce que les deux pivots (70, 80) sont réalisés en un matériau métallique.

10. Micromoteur selon l'une quelconque des revendications précedentes, caractérisé en ce que le pivot (78) venant de matière avec le fond (64) de la cage (60) est réalisé dans ce fond par tournage-décolletage.

## Patentansprüche

1. Elektromagnetischer Mikromotor der Bauart, welche umfaßt:
- einen Rotor (50), gebildet von einem Permanentmagneten (52), der mindestens teilweise in eine aus Kunststoffmaterial hergestellte Umhüllung (54) eingebettet ist, welche Umhüllung (54) ein Mittel zum mechanischen Kuppeln (59) mit einem anzutreibenden Mechanismus umfaßt,
- einen Käfig (60), in dessen Innerem frei drehbeweglich der Rotor (50) angeordnet ist, welcher Käfig an einem ersten Ende durch einen Boden (64) und an einem zweiten Ende durch einen Deckel (66) begrenzt ist und dazu bestimmt ist, in das Innere eines Stators eingefügt zu werden, und
- erste und zweite Drehführungsmittel (56, 58) des Rotors in dem Käfig, welche Mittel an der Umhüllung des Rotors wie auch an dem Boden (64) bzw. dem Deckel (66) des Käfigs (50) vorgesehen sind, dadurch gekennzeichnet, daß die ersten und zweiten Drehführungsmittel (56, 58) einerseits von zwei Ausnehmungen (74, 76) gebildet sind, die koaxial in die Umhüllung aus Kunststoffmaterial (54) eingearbeitet sind, und andererseits von zwei Zapfen (78, 80), die mit dem Boden (64) bzw. dem Dekkel (66) des Käfigs verbunden sind und dazu bestimmt sind, in die vorgenannten Ausnehmungen (74, 76) einzugreifen, wobei der mit dem Boden des Käfigs verbundene Zapfen (78) einstückig mit dem Boden (64) hergestellt ist.

2. Mikromotor nach Anspruch 1, bei dem der Boden (64) des Käfigs (60) einen Ausschnitt (86) aufweist, der den Eingriff des Kupplungsmittels (59) des Rotors (50) mit dem anzutreibenden Mechanismus ermöglicht, welcher Ausschnitt (86) in dem Boden (64) von einer Flanke begrenzt ist, dadurch gekennzeichnet, daß dieser Ausschnitt eine Flanke (88a) aufweist, die in den Boden (64) in einer als zurückgezogen bezeichneten Position eingearbeitet ist, derart, daß eine Materialzone zwischen dem Außenumfang des Zapfens (78) und der Flanke (88a) eliminiert wird.

3. Mikromotor nach Anspruch 1 oder 2, dadurch gekennzeichnet, daß der mit dem Deckel verbundene Zapfen (80) mit dem Deckel (66) des Käfigs (60) einstückig ausgebildet ist.

4. Mikromotor nach Anspruch 1 oder 2, dadurch gekenzeichnet, daß der Zapfen (80) des Deckels in den Deckel (66) eingefügt ist.

5. Mikromotor nach Anspruch 4, dadurch gekennzeichnet, daß der eingefügte Zapfen (80) kraftschlüssig in dem Deckel (66) montiert ist.

6. Mikromotor nach einem der vorangehenden Ansprüche, dadurch gekennzeichnet, daß die beiden Zapfen (70, 80) der beiden Führungsmittel unterschiedlichen Durchmesser aufweisen.

7. Mikromotor nach einem der vorangehenden Ansprüche, dadurch gekennzeichnet, daß die beiden Zapfen (70, 80) aus unterschiedlichen Materialien hergestellt sind.

8. Mikromotor nach einem der vorangehenden Ansprüche, bei dem das Kupplungsmittel (59) von einem Ritzel gebildet ist, das mit dem Korpus (5) der Hülle (54) einstückig ausgebildet ist, dadurch gekennzeichnet, daß die Ausnehmung (74) des ersten Drehführungsmittels (56) in den Ritzelkorpus (59) eingearbeitet ist in der Höhe der Zähne (82) dieses Ritzels (59), welche Rippen bilden und die Wandung (84), welche diese Ausnehmung (74) begrenzt, versteifen.

9. Mikromotor nach einem der vorangehenden Ansprüche, dadurch gekennzeichnet, daß die beiden Zapfen (70, 80) aus einem metallischen Material hergestellt sind.

10. Mikromotor nach einem der vorangehenden Ansprüche, dadurch gekennzeichnet, daß der Zapfen (78), der einstückig mit dem Boden (64) des Käfigs (60) ist, in diesem Boden durch Drehen und Abstechen hergestellt ist.

## Claims

1. Electromagnetic micromotor of the type comprising :
- a rotor (50) constituted by a permanent magnet (52) at least partially embedded in an overmoulding (54) formed from a plastic material, such overmoulding (54) including mechanical coupling means (59) for a mechanism to be driven,
- a cage (60) in the interior of which said rotor (50) is freely mounted in rotation, said cage being bounded at a first end by a bottom (64) and at a second end by a cover (66) and intended to be inserted into the interior of a stator, and
- first and second means (56, 58) for guiding the rotor in rotation within the cage, such means being arranged on the overmoulding of said rotor as well as respectively on the bottom (64) and on the cover (66) of said cage (50), characterized in that said first and second rotation guide means (56, 58) are constituted, on the one hand, by two housings (76, 78) arranged coaxially in said overmoulding of plastic material (54) and, on the other hand, by two spindles (78, 80) which are respectively fixed to the bottom (64) and the cover (66) of the cage and which are intended to be accommodated in one of the aforesaid housings (74, 76), the spindle (78) solid with the cage bottom being integral with the bottom (64).

2. Micromotor according to claim 1, in which the bottom (64) of the cage (60) comprises a notch (86) for the meshing of said coupling means (59) of the rotor (50) with said mechanism to be driven, said notch (86) being delimited in the bottom (64) by a flange, characterized in that said notch comprises a flange (88a) arranged in said bottom (64) in a said rearward position, so that a zone of material (4) between the outer periphery of the spindle (78) and said flange (88a) is eliminated.

3. Micromotor according to claim 1 or 2, characterized in that the spindle (80) solid with the cover is integral with the cover (66) of the cage (60).

4. Micromotor according to claim 1 or 2, characterized in that the spindle (80) of the cover is inserted into said cover (66).

5. Micromotor according to claim 4, characterized in that the inserted spindle (80) is force mounted into said cover (66).

6. Micromotor according to any one of the preceding claims, characterized in that the two spindles (70, 80) of the two guide means have different diameters.

7. Micromotor according to any one of the preceding claims, characterized in that the two spindles (70, 80) are formed from different materials.

8. Micromotor according to any one of the preceding claims in which the coupling means (59) is constituted by a pinion integral with the body (8) of the overmoulding (54), characterized in that the housing (74) of the first rotation guide means (56) is arranged in the body of the pinion (59) at the height of the teeth (82) of such pinion (59) which teeth form a stiffener and rigidify the wall (84) defining said housing (74).

9. Micromotor according to any one of the preceding claims, characterized in that the two spindles (70, 80) are formed in a metallic material.

10. Micromotor according to any one of the preceding claims, characterized in that the spindle (78) integral with the bottom (64) of the cage (60) is formed in this bottom by turning-profile turning.
